# EUROPÄISCHE PATENTANMELDUNG

(11) **EP 3 978 279 A1**
(43) Veröffentlichungstag der Anmeldung: **06.04.2022**
(21) Anmeldenummer: 20199546.1
(22) Anmeldetag: 01.10.2020
(51) Int. Cl.: B60G 1/04

(54) **WAGEN ZUM TRANSPORT VON PERSONEN UND/ODER GÜTERN**

(71) Anmelder: Onomotion GmbH, 12435 Berlin (DE)
(72) Erfinder: Kahle, Philipp, 10319 Berlin (DE); Löffler, Norman, 10247 Berlin (DE); Merkel, Sabine, 94342 Straßkirchen (DE); Seidl, Josef, 94342 Straßkirchen (DE); Knott, Maximilian, 82319 Starnberg (DE); Müller, Anna, 81673 München (DE)
(74) Vertreter: Schorr, Peter Karl

(57) **Zusammenfassung**

Die Erfindung betrifft einen Wagen (2) zum Transport von Personen und/oder Gütern mit mindestens einem Rahmen (4), der mindestens ein Rahmenelement (6) umfasst, das im Wesentlichen parallel oder schräg zur Längsrichtung (8) des Wagens (2) erstreckt ist mit mindestens einem Radträger (16), der lösbar am Rahmenelement (6) festlegbar ist und der mit dem Rahmenelement (16) einen Aufnahmebereich (9) zwischen Radträger (16) und Rahmenelement (6) bildet, in welchem Radträger (16) und Rahmenelement (6) einen Hohlraum bildend zumindest abschnittsweise zueinander beanstandet sind, und mit mindestens einer ein Rad (14) umfassenden Radeinheit (12), die zumindest abschnittsweise im Aufnahmebereich (9) zwischen Radträger (16) und Rahmenelement (6) drehbar gelagert festlegbar oder festgelegt ist.

## Beschreibung

Die Erfindung betrifft einen Wagen zum Transport von Personen und/oder Gütern.

Aus dem Stand der Technik sind Wagen bekannt, die Achslager verwenden, die nach unten offen sind. Bei derartigen Wagen wird die Radnabe von unten eingesetzt. Um eine Radeinheit zu montieren, zu warten oder zu reparieren, muss solchenfalls der Wagen um den Raddurchmesser der Radeinheit angehoben werden, um das Rad der Radeinheit entfernen zu können. Besonders bei schweren Wagen erweist sich dieses als nachteilig.

Darüber hinaus sind Wagen mit nur einseitigen Lagerungen bekannt, bei denen sich die Achse meist an einer Wagenseite befindet. Bei einer Entlastung der Radeinheit ist eine seitliche Demontage und Montage eines Rads möglich. Allerdings treten bei schweren Wagen starke Biegekräfte auf, so dass die Achse und der die Achse aufnehmende Rahmen massiv ausgelegt werden muss.

Eine Aufgabe eines Ausführungsbeispiels der Erfindung ist, einen Wagen zum Transport von Personen und/oder Gütern vorzuschlagen, bei dem eine Montage und/oder Demontage eines Rads erleichtert ist.

Diese Aufgabe wird gelöst durch einen Wagen zum Transport von Personen und/oder Gütern mit mindestens einem Rahmen, der mindestens ein Rahmenelement umfasst, das im Wesentlichen parallel oder schräg zur Längsrichtung des Wagens erstreckt ist mit mindestens einem Radträger, der lösbar am Rahmenelement festlegbar ist und der mit dem Rahmenelement einen Aufnahmebereich zwischen Radträger und Rahmenelement bildet, in welchem Radträger und Rahmenelement einen Hohlraum bildend zumindest abschnittsweise zueinander beanstandet sind, und mit mindestens einer ein Rad umfassenden Radeinheit, die zumindest abschnittsweise im Aufnahmebereich zwischen Radträger und Rahmenelement drehbar gelagert festlegbar oder festgelegt ist.

Dadurch, dass der Wagen einen Radträger umfasst, an dem die Radeinheit drehbar festlegbar ist und der lösbar an dem Rahmenelement des Rahmens des Wagens anordenbar ist, ist die ein Rad umfassende Radeinheit auf einfache Weise montierbar und demontierbar. Insbesondere kann auf ein Anheben des Wagens verzichtet werden, sofern ein partielles Entlasten der Radeinheit ermöglicht ist.

Dadurch, dass der Radträger lösbar am Rahmenelement festlegbar ist, kann die Radeinheit am Radträger vormoniert werden, bevor der Radträger am Rahmenelement festgelegt wird. Hierdurch die Montage und Demontage erleichtert.

Bei dem Wagen kann es sich beispielsweise um ein elektromotorisch-, verbrennungsmotorisch- und/oder muskelkraft-betriebenes Fahrzeug handeln. Darüber hinaus kann es sich bei dem Wagen um einen Anhänger oder jeglicher Art schiebbaren und/oder ziehbaren Wagen handeln. Bei einer bevorzugten Ausführungsform umfasst der Wagen ein Transportrad, das einen Fahrerbereich, in dem oder an dem ein Fahrzeuginsasse anordenbar und insbesondere mittels einer Pedaleinheit den Wagen muskelkraftbetrieben bewegend, platzierbar ist und der einen ladeflächenartigen Transportbereich umfasst, in dem oder auf dem eine Zusatzlast, wie Transportbox, Personen oder jegliche Art von Gegenständen anordenbar ist.

Das Rahmenelement kann grundsätzlich an einer beliebigen Stelle des Rahmens des Wagens angeordnet sein. Bei einer Ausführungsform umgibt das Rahmenelement den Wagen an dessen Außenseite zumindest abschnittsweise seitlich. Hierdurch ist die Zugänglichkeit der Radeinheit verbessert und die Montage, bzw. Demontage der Radeinheit weiter erleichtert.

Grundsätzlich kann der Radträger unlösbar am Rahmenelement festgelegt werden, beispielsweise verschweißt, verlötet oder verklebt. Darüber hinaus ist es denkbar, dass die Radeinheit unlösbar am Radträger festlegbar ist und gemeinsam mit dem Radträger montiert oder demontiert wird. Bei einer Ausführungsform des Wagens erweist es sich jedoch als vorteilhaft, wenn der Radträger lösbar am Rahmenelement und/oder die Radeinheit lösbar am Radträger festlegbar ist.

Solchenfalls ist ein Montieren, bzw. Demontieren einzelner Bauteile und Baugruppen erleichtert.

Ferner kann die Radeinheit ausschließlich am Radträger drehbar gelagert sein. Solchenfalls kann der Rahmen bauteilreduziert ausgebildet werden.

Der durch einen Hohlraum gebildete Aufnahmebereich zwischen Radträger und Rahmenelement kann durch einen bezüglich seiner Erstreckung in Richtung auf den Wagen zurückspringenden Bereich des Rahmenelements, durch einen in Richtung von der Radeinheit weg angeformten Abschnitt des Radträgers und/oder durch mindestens ein Rahmenelement und Radträger zueinander beabstandendes Abstandselement gebildet sein. Hierdurch ist der den Hohlraum umfassende Aufnahmebereich auf einfache Weise ausbildbar.

Um die Gefahr eines Verbiegens der Radeinheit zu reduzieren, beispielsweise wenn der Wagen ein hohes Eigengewicht oder eine hohe Zusatzlast transportiert, ist bei einer Ausführungsform des Wagens vorgesehen, dass die Radeinheit mindestens ein Radlager umfasst, um das das Rad der Radeinheit drehbar gelagert ist, das mit einem ersten Radlagerelement drehfest und lösbar am Radträger festlegbar ist und/oder das mit einem dem ersten Radlagerelement gegenüberliegenden zweiten Radlagerelement drehfest an einer am Rahmen, insbesondere am Rahmenelement, festgelegten Achse des Wagens festlegbar ist.

Solchenfalls ist die Radeinheit über das Radlager nur am Radträger oder nur am Rahmen, insbesondere am Rahmenelement, oder einerseits am Radträger und andererseits an der Achse des Wagens festlegbar. Letzterenfalls können durch die Radeinheit hohe Kräfte aufgenommen werden, wobei die Gefahr eines Verbiegens der Radeinheit reduziert ist.

Die Radeinheit kann mittelbar oder unmittelbar am Radträger und/oder an der Achse des Wagens festlegbar sein. Das Koppeln der Radeinheit mit dem Radträger und/oder der Achse, kann kraftschlüssig, reibschlüssig und/oder formschlüssig erfolgen. Wenn das Koppeln formschlüssig erfolgt, kann das erste Radlagerelement und/oder das zweite Radlagerelement eine Außenkontur umfassen, die korrespondierend, insbesondere komplementär, mit einer Innenkontur einer Aufnahme des Radträgers und/oder einer Aufnahme der Achse des Wagens ausgebildet ist.

Um die Radeinheit auf einfache Weise am Radträger festzulegen, ist bei einer Weiterbildung letztgenannter Ausführungsform mindestens ein schrauben-bolzenförmiges Festlegemittel vorgesehen, das an einem Ende einen Kopfabschnitt und am gegenüberliegenden Ende einen Außengewindeabschnitt umfasst, und das zum Fügen des Radlagers mit dem Radträger durch mindestens eine durchgehende Öffnung im Radträger hindurchsteckbar und in einer Ausnehmung im Radlager festlegbar ist, wobei die durchgehende Öffnung im Radträger einen Durchmesser aufweist, der geringer ist, als der Durchmesser des Kopfabschnitts des Festlegemittels und wobei die Ausnehmung einen Innengewindeabschnitt umfasst, der korrespondierend, insbesondere komplementär zum Außengewindeabschnitt des Festlegemittels ausgebildet ist.

Solchenfalls kann die Radeinheit auf einfache Weise mit dem Radträger verschraubt werden.

Um eine unbeabsichtigte Relativbewegung zwischen Radeinheit und Radträger zu verhindern, können mindestens zwei, insbesondere mindestens drei Festlegemittel vorgesehen sein, die zur Drehachse der Radeinheit beabstandet Radträger und Radeinheit miteinander verbinden.

Darüber hinaus erweist es sich als vorteilhaft, wenn der Wagen mindestens eine Bremseinheit umfasst, die mindestens eine Bremsscheibe umfasst, die auf der dem Radträger zugewandten Seite der Radeinheit drehfest mit dem Rad verbindbar oder verbunden ist, und die mindestens ein am Radträger angeordnetes Klemmmittel umfasst, durch das die Bremsscheibe klemmbar ist.

Die Bremsscheibe kann mittelbar oder unmittelbar mit dem Rad verbunden sein. Dadurch, dass das die Klemmscheibe klemmende Klemmmittel am Radträger anordenbar ist, können Klemmmittel und Radträger vormontiert miteinander gefügt werden. Darüber hinaus ist ein Montieren und Demontieren der Radeinheit hierdurch erleichtert, weil die einzelnen Bauteile der Bremseinheit leicht zugänglich sind.

Der Wagen kann eine Vielzahl von Bauteilen oder Baugruppen umfassen, denen mittels Kabel elektrische Energie zuführbar ist und/oder die mittels Kabel ansteuerbar sind. Darüber hinaus kann der Wagen eine Vielzahl von Seilzügen umfassen, durch die einzelne Bauteile oder Baugruppen angesteuert sind. Ferner kann der Wagen ein hydraulisches System umfassen, bei dem hydraulische Leitungen durch den Wagen verlaufen.

Nachfolgend wird der Begriff "Leitung" zusammenfassend für elektrische oder hydraulische Leitungen und/oder Kabel sowie mechanische Seilzüge verwendet.

Bei einer Ausführungsform des Wagens ist vorgesehen, dass der Radträger auf der der Radeinheit zugewandten Seite mindestens ein Haltemittel umfasst, an dem mindestens eine am Rahmenelement festgelegte Leitung festlegbar ist, insbesondere an dem mindestens eine mit dem Klemmmittel der Bremseinheit verbindbare oder verbundene Leitung festlegbar ist.

Durch das Vorsehen mindestens eines Klemmmittels werden mögliche Bewegungen der Leitung im Bereich des Radträgers, die beispielsweise durch Bewegungen oder Vibrationen des Wagens entstehen können, begrenzt.

Bei dem Wagen kann es sich wie zuvor beschrieben um eine Vielzahl von Fahrzeugen, insbesondere Lastfahrzeuge und Anhänger, handeln. Werden mit dem Wagen Lasten oder Personen transportiert, erweist es sich bei einer Ausführungsform des Wagens als vorteilhaft, wenn dieser mindestens eine Bodenplatte aufweist, die unmittelbar oder mittelbar am Rahmen, insbesondere am Rahmenelement festlegbar oder festgelegt ist, und an der oder auf der mindestens eine Zusatzlast anordenbar ist.

Die Bodenplatte ist bevorzugt oberhalb des Radlagers der Radeinheit verlaufend angeordnet. Darüber hinaus kann das Radlager der Radeinheit oberhalb der Bodenplatte verlaufend angeordnet sein.

Der zurückspringende Bereich des Rahmenelements kann technisch beliebig umgesetzt sein, sofern er der Funktion nachkommt, einen bezüglich der Erstreckungsrichtung des Rahmenelements zurückspringenden Bereich zur Verfügung zu stellen. Bei Ausführungsformen des Wagens ist der zurückspringende Bereich des Rahmenelements durch einen angeformten Abschnitts des Rahmenelements und/oder durch eine Aussparung gebildet.

Wenn der zurückspringende Bereich des Rahmenelements durch einen angeformten Abschnitt des Rahmenelements ausgebildet ist, ist der zurückspringende Bereich ohne Materialschwächung des Rahmenelements realisierbar. Wenn der angeformte Abschnitt des Rahmenelements durch eine Aussparung gebildet ist, kann der Wagen kompakt ausgebildet werden.

Alternativ oder ergänzend hierzu erweist es sich als vorteilhaft, wenn der Radträger mit einem Ende oder mit zwei Enden außerhalb des Aufnahmebereichs des Rahmenelements am Rahmenelement festlegbar oder festgelegt ist.

Wenn der Radträger nur mit einem Ende am Rahmenelement festgelegt ist, ist der einen Hohlraum bildende Aufnahmebereich nicht in Gänze durch Radträger und Rahmenelement rahmenartig umgeben, sondern zu einer Seite hin offen.

Wenn der Radträger nur mit zwei Enden am Rahmenelement festgelegt ist, ist der einen Hohlraum bildende Aufnahmebereich in Gänze durch Radträger und Rahmenelement rahmenartig umgeben.

Wenn der Radträger einen dem zurückspringenden Bereich des Rahmenelements gegenüberliegende in Richtung von der Radeinheit weg angeformten Abschnitt umfasst, kann der zurückspringende Bereich des Rahmenelements weniger stark ausgeformt ausgebildet sein. Hierdurch ist der benötigte Platz für ein Hineintragen des Rahmenelements in Richtung Fahrzeugmitte reduziert, wodurch die Transportkapazität des Wagens erhöht ist. Zudem können hierdurch bestehende Rahmenelement ohne umständliche Änderungsmaßnehmen eine Radeinheit aufnehmen.

Wenn der Radträger außerhalb des zurückspringenden Bereichs des Rahmenelements am Rahmenelement festlegbar ist, ist der verfügbare Platz zum Anordnen der Radeinheit maximal.

Um ein Fügen und Montieren der Radeinheit am Radträger und/oder des Radträgers an dem Rahmenelement zu erleichtern, umfasst der Radträger bei einer Ausführungsform des Wagens mindestens eine durchgehende Durchbrechung, durch die die Radeinheit von einer der Radeinheit abgewandten Seite des Radträgers zugänglich ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Wagens.

In der Zeichnung zeigt:
- Figur 1: Eine isometrische Seitenansicht auf einen Abschnitt eines ersten Ausführungsbeispiels des Wagens;
- Figur 2: Eine explosionsartige Darstellung eines Radträgers an einer Radeinheit des Wagens gemäß Figur 1
- Figur 3: Eine isometrische Seitenansicht auf einen Abschnitt eines zweiten Ausführungsbeispiels des Wagens.

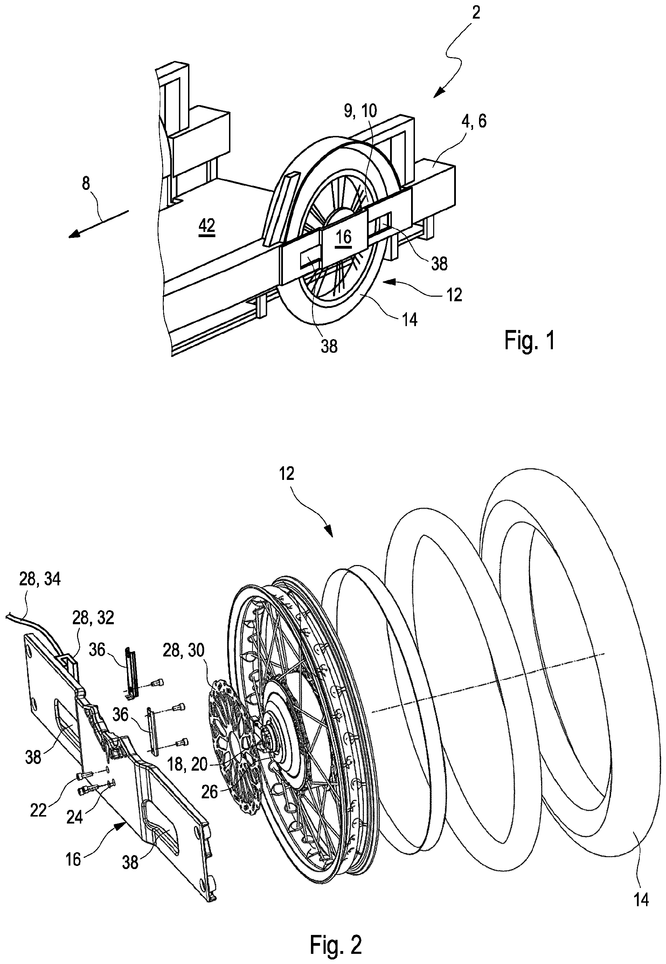

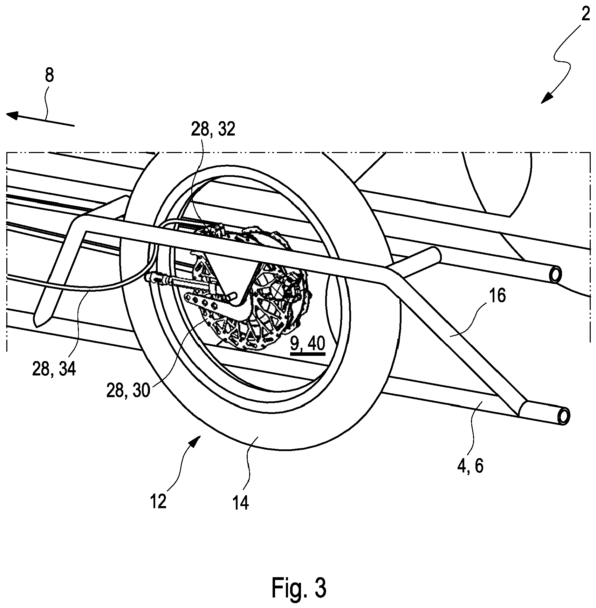

Die Figuren 1 und 3 zeigen jeweils einen insgesamt mit dem Bezugszeichen 2 versehenen Wagen zum Transport von Personen und/oder Gütern. Der Wagen 2 umfasst mindestens einen Rahmen 4, der seinerseits mindestens ein Rahmenelement 6 umfasst. Das Rahmenelement 6 ist im Wesentlichen parallel zu einer Längsrichtung 8 des Wagens 2 erstreckt.

Radträger 16 und Rahmenelement 6 bilden einen Aufnahmebereich 9 zwischen Radträger 16 und Rahmenelement 6, in welchem Radträger 16 und Rahmenelement 6 einen Hohlraum umschließend zueinander beanstandet sind.

Um den Aufnahmebereich 9 zu bilden umfasst beim Ausführungsbeispiel gemäß Figur 1 das Rahmenelement 6 einen bezüglich seiner Erstreckung in Richtung auf den Wagen 2 zurückspringenden Bereich 10. Der in Richtung auf den Wagen 2 zurückspringenden Bereich 10 des Rahmenelements 6 ist in Richtung nach außen geöffnet.

Darüber hinaus umfasst der Wagen 2 eine Radeinheit 12, die ein Rad 14 aufweist. Die Radeinheit 12 ist zumindest abschnittsweise im zurückspringenden Bereich 10 des Rahmenelements 6 angeordnet. Um die Radeinheit 12 festzulegen, umfasst der Wagen 2 einen Radträger 16, der am Rahmenelement 6 festlegbar ist, der in einer festgelegten Anordnung (Figur 1) den zurückspringenden Bereich 10 des Rahmenelements 6 überfängt und an dem die Radeinheit 12 drehbar gelagert festgelegt ist.

Die einzelnen Komponenten des Wagens 2, insbesondere der Radeinheit 12 und des Radträgers 16, werden nachfolgend näher an Figur 2 beschrieben:
Die Radeinheit 12 umfasst ein Radlager 18, mit der die Radeinheit 12 bei dem in Figur 2 gezeigten Ausführungsbeispiel lösbar am Radträger 16 festlegbar ist. Hierzu umfasst das Radlager 18 ein erstes Radlagerelement 20, das drehfest und lösbar am Radträger 16 festgelegt ist. Um das erste Radlagerelement 20 des Radlagers 18 am Radträger 16 festzulegen, umfasst dieses drei bolzenförmige Festlegemittel 22, die jeweils an einem Ende einen Kopfabschnitt und am gegenüberliegenden Ende ein Außengewinde umfassen und zum Fügen des Radlagers 18 mit dem Radträger 16 durch mindestens eine durchgehende Öffnung 24 im Radträger 16 hindurchsteckbar und in einer Ausnehmung 26 im Radlager 18 festlegbar sind. Hierzu umfassen die Ausnehmungen 26 im Radlager 18 jeweils einen Innengewindeabschnitt in dem das Festlegemittel 22 mit einem dem Kopfabschnitt gegenüberliegenden Außengewindeabschnitt festlegbar ist.

Darüber hinaus umfasst der Wagen 2 einen Bremseinheit 28, die mindestens eine Bremsscheibe 30 umfasst, die auf der dem Radträger 16 zugewandten Seite der Radeinheit 12 drehfest mit dem Rad 14 verbunden ist und die mindestens ein am Radträger 16 angeordnetes Klemmmittel 32 umfasst, durch das die Bremsscheibe 30 klemmbar ist. Die Bremseinheit 28 ist durch eine Leitung 34 betätigbar. Diese ist mit Haltemitteln 36 an dem Radträger 16 festlegbar. Um die Zugänglichkeit zur Radeinheit 12 zu erhöhen, sind im Radträger 16 bei dem in den Figuren gezeigten Ausführungsbeispiel zwei durchgehende Durchbrechungen 38 angeordnet.

Um die Radeinheit am Rahmenelement 6 festzulegen, wird die Radeinheit 12 zumindest abschnittsweise im zurückspringenden Bereich 10 angeordnet. Um den zurückspringenden Bereich 10 baulich gering zu halten, umfasst der Radträger 16 gemäß Figuren 1 und 2 einem dem zurückspringenden Bereich 10 gegenüberliegenden und vom Rahmenelement 6 wegerstreckten angeformten Abschnitt 40. Zurückspringender Bereich 10 des Rahmenelements 6 und vom Rahmenelement 6 wegerstreckt angeformter Abschnitt 40 des Radträgers 16 bilden beim Ausführungsspiel der Figuren 1 und 2 den Aufnahmebereich 9.

Um Lasten zu transportieren, umfasst der Wagen 2 eine Bodenplatte 42, die unmittelbar am Rahmen 4, insbesondere am Rahmenelement 6, festgelegt ist und an der mindestens eine Zusatzlast anordenbar ist.

Figur 3 zeigt ein zweites Ausführungsbeispiel des Wagens 2, bei dem der Aufnahmebereich 9 ausschließlich durch einen vom Rahmenelement 6 wegerstreckt angeformten Abschnitt 40 des Radträgers 16 gebildet ist. Hierdurch kann das Rahmenelement 6 unverformt und ohne Materialschwächung ausgebildet werden.

Im Folgenden wird kurz die Wirkungsweise des Wagens 2 beschrieben:
Zum Montieren einer Radeinheit 12 am Rahmenelement 6, wird die Radeinheit 12 mittels der Festlegemittel 22 am Radträger 16 festgelegt. Hierzu kann zunächst die Bremsscheibe 30 der Bremseinheit 28 an der Radeinheit 12 festgelegt werden, um dann derart vormontiert am Radträger 16 angeordnet zu werden. Hiernach ist das Klemmmittel 32 der Bremseinheit 28 am Radträger 16 festlegbar und entweder bereits vormontiert mit der Leitung 34 oder mit der Leitung 34 verbindbar, koppelbar. Das Gesamtsystem aus Radträger 16, Radeinheit 12 und Bremseinheit 28 ist solchenfalls am Rahmenelement 6 festlegbar.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Wagen
- 4: Rahmen
- 6: Rahmenelement
- 8: Längsrichtung
- 10: zurückspringender Bereich
- 12: Radeinheit
- 14: Rad
- 16: Radträger
- 18: Radlager
- 20: erstes Radlagerelement
- 22: Festlegemittel
- 24: durchgehende Öffnung
- 26: Ausnehmung
- 28: Bremseinheit
- 30: Bremsscheibe
- 32: Klemmmittel
- 34: Leitung
- 36: Haltemittel
- 38: Durchbrechung
- 40: angeformter Abschnitt
- 42: Bodenplatte

## Patentansprüche

1. Wagen (2) zum Transport von Personen und/oder Gütern mit mindestens einem Rahmen (4), der mindestens ein Rahmenelement (6) umfasst, das im Wesentlichen parallel oder schräg zur Längsrichtung (8) des Wagens (2) erstreckt ist mit mindestens einem Radträger (16), der lösbar am Rahmenelement (6) festlegbar ist und der mit dem Rahmenelement (16) einen Aufnahmebereich (9) zwischen Radträger (16) und Rahmenelement (6) bildet, in welchem Radträger (16) und Rahmenelement (6) einen Hohlraum bildend zumindest abschnittsweise zueinander beanstandet sind, und mit mindestens einer ein Rad (14) umfassenden Radeinheit (12), die zumindest abschnittsweise im Aufnahmebereich (9) zwischen Radträger (16) und Rahmenelement (6) drehbar gelagert festlegbar oder festgelegt ist.

2. Wagen (2) nach Anspruch 1, **dadurch gekennzeichnet, dass** der durch einen Hohlraum gebildete Aufnahmebereich (9) zwischen Radträger (16) und Rahmenelement (6), durch einen bezüglich seiner Erstreckung in Richtung auf den Wagen (2) zurückspringenden Bereich (10) des Rahmenelements (6), durch einen in Richtung von der Radeinheit (12) weg angeformten Abschnitt (40) des Radträgers (16) und/oder durch mindestens ein Rahmenelement (6) und Radträger (16) zueinander beabstandendes Abstandselement gebildet ist.

3. Wagen (2) nach Anspruch 1 oder 2, **dadurch gekennzeichnet, dass** die Radeinheit (12) mindestens ein Radlager (18) umfasst, um das das Rad (14) der Radeinheit (12) drehbar gelagert ist, das mit einem ersten Radlagerelement (20) drehfest und lösbar am Radträger (16) festlegbar ist und/oder das mit einem dem ersten Radlagerelement (20) gegenüberliegenden zweiten Radlagerelement (20) drehfest an einer am Rahmen (4), insbesondere am Rahmenelement (6) festgelegten Achse des Wagens (2) festlegbar ist.

4. Wagen (2) nach Anspruch 3, **gekennzeichnet durch** mindestens ein schrauben- oder bolzenförmiges Festlegemittel (22), das an einem Ende einen Kopfabschnitt und am gegenüberliegenden Ende einen Außengewindeabschnitt umfasst, und das zum Fügen des Radlagers (18) mit dem Radträger (16) durch mindestens eine durchgehende Öffnung (24) im Radträger (16) hindurchsteckbar und in einer Ausnehmung (26) im Radlager (18) festlegbar ist, wobei die durchgehende Öffnung (24) im Radträger (16) einen Durchmesser aufweist, der geringer ist, als der Durchmesser des Kopfabschnitts des Festlegemittels (22) und wobei die Ausnehmung (26) einen Innengewindeabschnitt umfasst, der korrespondierend, insbesondere komplementär zum Außengewindeabschnitt des Festlegemittels (22) ausgebildet ist.

5. Wagen (2) nach mindestens einem der vorhergehenden Ansprüche, **gekennzeichnet durch** mindestens eine Bremseinheit (28), die mindestens eine Bremsscheibe (30) umfasst, die auf der dem Radträger (16) zugewandten Seite der Radeinheit (12) drehfest mit dem Rad (14) verbindbar oder verbunden ist, und die mindestens ein am Radträger (16) angeordnetes Klemmmittel (32) umfasst, durch das die Bremsscheibe (30) klemmbar ist.

6. Wagen (2) nach mindestens einem der vorhergehenden Ansprüche, **dadurch gekennzeichnet, dass** der Radträger (16) auf der der Radeinheit (12) zugewandten Seite mindestens ein Haltemittel (36) umfasst, an dem mindestens eine am Rahmenelement (6) festgelegte Leitung (34) festlegbar ist, insbesondere an dem mindestens eine mit dem Klemmmittel (32) der Bremseinheit (28) verbindbare oder verbundene Leitung (34) festlegbar ist.

7. Wagen (2) nach mindestens einem der vorhergehenden Ansprüche, **gekennzeichnet durch** mindestens eine Bodenplatte (42), die unmittelbar oder mittelbar am Rahmen (4), insbesondere am Rahmenelement (6) festlegbar oder festgelegt ist, und an der oder auf der mindestens eine Zusatzlast anordenbar ist.

8. Wagen (2) nach mindestens einem der Ansprüche 2 bis 7, **dadurch gekennzeichnet, dass** der zurückspringende Bereich (10) des Rahmenelements (6) durch einen angeformten Abschnitt (40) des Rahmenelements (6) und/oder durch eine Aussparung gebildet ist.

9. Wagen (2) nach mindestens einem der Ansprüche 2 bis 8, **dadurch gekennzeichnet, dass** der Radträger (16) mit einem Ende oder mit zwei Enden außerhalb des Aufnahmebereichs (9) des Rahmenelements (6) am Rahmenelement (6) festlegbar oder festgelegt.

10. Wagen (2) nach mindestens einem der vorhergehenden Ansprüche, **dadurch gekennzeichnet, dass** der Radträger (16) mindestens eine durchgehende Durchbrechung (38) umfasst, durch die die Radeinheit (12) von einer der Radeinheit (12) abgewandten Seide des Radträgers (16) zugänglich ist.

## Geänderte Patentansprüche

### Geänderte Patentansprüche gemäss Regel 137(2) EPÜ.

1. Wagen (2) zum Transport von Personen und/oder Gütern mit mindestens einem Rahmen (4), der mindestens ein Rahmenelement (6) umfasst, das im Wesentlichen parallel oder schräg zur Längsrichtung (8) des Wagens (2) erstreckt ist mit mindestens einem Radträger (16), der lösbar am Rahmenelement (6) festlegbar ist und der mit dem Rahmenelement (16) einen Aufnahmebereich (9) zwischen Radträger (16) und Rahmenelement (6) bildet, in welchem Radträger (16) und Rahmenelement (6) einen Hohlraum bildend zumindest abschnittsweise zueinander beanstandet sind, und mit mindestens einer ein Rad (14) umfassenden Radeinheit (12), die zumindest abschnittsweise im Aufnahmebereich (9) zwischen Radträger (16) und Rahmenelement (6) drehbar gelagert festlegbar oder festgelegt ist **dadurch gekennzeichnet, dass** der durch einen Hohlraum gebildete Aufnahmebereich (9) zwischen Radträger (16) und Rahmenelement (6), durch einen bezüglich seiner Erstreckung in Richtung auf den Wagen (2) zurückspringenden Bereich (10) des Rahmenelements (6) gebildet ist und dass der Radträger (16) mit einem Ende oder mit zwei Enden außerhalb des Aufnahmebereichs (9) des Rahmenelements (6) am Rahmenelement (6) festlegbar oder festgelegt.

2. Wagen (2) nach Anspruch 1, **dadurch gekennzeichnet, dass** der durch einen Hohlraum gebildete Aufnahmebereich (9) zwischen Radträger (16) und Rahmenelement (6) durch einen in Richtung von der Radeinheit (12) weg angeformten Abschnitt (40) des Radträgers (16) und/oder durch mindestens ein Rahmenelement (6) und Radträger (16) zueinander beabstandendes Abstandselement gebildet ist.

3. Wagen (2) nach Anspruch 1 oder 2, **dadurch gekennzeichnet, dass** die Radeinheit (12) mindestens ein Radlager (18) umfasst, um das das Rad (14) der Radeinheit (12) drehbar gelagert ist, das mit einem ersten Radlagerelement (20) drehfest und lösbar am Radträger (16) festlegbar ist und/oder das mit einem dem ersten Radlagerelement (20) gegenüberliegenden zweiten Radlagerelement (20) drehfest an einer am Rahmen (4), insbesondere am Rahmenelement (6) festgelegten Achse des Wagens (2) festlegbar ist.

4. Wagen (2) nach Anspruch 3, **gekennzeichnet durch** mindestens ein schrauben- oder bolzenförmiges Festlegemittel (22), das an einem Ende einen Kopfabschnitt und am gegenüberliegenden Ende einen Außengewindeabschnitt umfasst, und das zum Fügen des Radlagers (18) mit dem Radträger (16) durch mindestens eine durchgehende Öffnung (24) im Radträger (16) hindurchsteckbar und in einer Ausnehmung (26) im Radlager (18) festlegbar ist, wobei die durchgehende Öffnung (24) im Radträger (16) einen Durchmesser aufweist, der geringer ist, als der Durchmesser des Kopfabschnitts des Festlegemittels (22) und wobei die Ausnehmung (26) einen Innengewindeabschnitt umfasst, der korrespondierend, insbesondere komplementär zum Außengewindeabschnitt des Festlegemittels (22) ausgebildet ist.

5. Wagen (2) nach mindestens einem der vorhergehenden Ansprüche, **gekennzeichnet durch** mindestens eine Bremseinheit (28), die mindestens eine Bremsscheibe (30) umfasst, die auf der dem Radträger (16) zugewandten Seite der Radeinheit (12) drehfest mit dem Rad (14) verbindbar oder verbunden ist, und die mindestens ein am Radträger (16) angeordnetes Klemmmittel (32) umfasst, durch das die Bremsscheibe (30) klemmbar ist.

6. Wagen (2) nach mindestens einem der vorhergehenden Ansprüche, **dadurch gekennzeichnet, dass** der Radträger (16) auf der der Radeinheit (12) zugewandten Seite mindestens ein Haltemittel (36) umfasst, an dem mindestens eine am Rahmenelement (6) festgelegte Leitung (34) festlegbar ist, insbesondere an dem mindestens eine mit dem Klemmmittel (32) der Bremseinheit (28) verbindbare oder verbundene Leitung (34) festlegbar ist.

7. Wagen (2) nach mindestens einem der vorhergehenden Ansprüche, **gekennzeichnet durch** mindestens eine Bodenplatte (42), die unmittelbar oder mittelbar am Rahmen (4), insbesondere am Rahmenelement (6) festlegbar oder festgelegt ist, und an der oder auf der mindestens eine Zusatzlast anordenbar ist.

8. Wagen (2) nach mindestens einem der Ansprüche 2 bis 7, **dadurch gekennzeichnet, dass** der zurückspringende Bereich (10) des Rahmenelements (6) durch einen angeformten Abschnitt (40) des Rahmenelements (6) und/oder durch eine Aussparung gebildet ist.

9. Wagen (2) nach mindestens einem der vorhergehenden Ansprüche, **dadurch gekennzeichnet, dass** der Radträger (16) mindestens eine durchgehende Durchbrechung (38) umfasst, durch die die Radeinheit (12) von einer der Radeinheit (12) abgewandten Seide des Radträgers (16) zugänglich ist.
